Europäisches Patentamt

**European Patent Office**

**Office européen des brevets**

(11) Publication number:

**0 175 531**
A2

(12) # EUROPEAN PATENT APPLICATION

(21) Application number: **85306379.0**

(22) Date of filing: **09.09.85**

(51) Int. Cl.⁴: **F 16 K 1/228,** F 16 K 5/20

(30) Priority: **15.09.84 GB 8423382**

(43) Date of publication of application: **26.03.86**
**Bulletin 86/13**

(84) Designated Contracting States: **BE DE FR GB IT NL SE**

(71) Applicant: **The British Petroleum Company p.l.c.,**
**Britannic House Moor Lane, London EC2Y 9BU (GB)**

(72) Inventor: **Brookes, David Alan The British Petroleum**
**p.l.c., Kent Refinery Isle of Grain, Rochester Kent,**
**ME3 0AG (GB)**

(74) Representative: **MacLeod, Malcolm et al, BP**
**INTERNATIONAL LIMITED Patents Division Chertsey**
**Road, Sunbury-on-Thames Middlesex TW16 7LN (GB)**

(54) **Sealing assembly.**

(57) An inflatable sealing element comprises:
(a) a body of elastomeric material having an internal chamber
and being adapted when inflated to bear against a non-compressible surface to effect a seal,
(b) a feed spigot for supplying fluid to the internal chamber of
(a) to cause the latter to inflate, and
(c) a rigid reinforcing member substantially filling the internal
chamber of (a) when the latter is in the deflated condition.
   The presence of the reinforcing member ensures more accurate positioning of the internal chamber and greater uniformity of expansion of the body, thereby improving the seal.
   The seal is suitable for use in ball valves.

1

# SEALING ASSEMBLY

This invention relates to a sealing assembly and more particularly to a sealing assembly for ball valves suitable for installation in oil and gas pipelines and to ball valves including same.

Ball valves are known and have been previously used in oil and gas pipelines and elsewhere. A ball valve comprises a body within which is a rigid seal housing which compresses a sealing element of compressible material, e.g. rubber, into engagement with the ball to effect the sealing. The compressible material and the surface of the ball itself are subject to erosion, possibly in the case of a crude oil pipeline by produced solids such as sand, and therefore develop leaks. When a leak is present it is frequently necessary to replace the entire valve. This operation is expensive since, in addition to the cost of the replacement, the system has to be closed down and production interrupted.

Our copending European patent application 0 063 959-A discloses a sealing assembly comprising two non-compressible and relatively movable members having a sealing element located therebetween, the sealing element being operated by the pressure of hydraulic fluid to provide a seal between the two non-compressible members, and wherein the sealing element is located in a recess in one of the non-compressible members so that when the pressure of the hydraulic fluid is released the element retracts into the recess to release the sealing engagement and facilitate the relative movement of the non-compressible members.

The sealing element can conveniently be a bag inflatable by the introduction of fluid into sealing engagement with the non-compressible members.

We have now devised an improved sealing element.

Thus according to the present invention there is provided an inflatable sealing element comprising:

(a) a body of elastomeric material having an internal chamber and being adapted when inflated to bear against a non-compressible surface to effect a seal,

(b) a feed spigot for supplying fluid to the internal chamber of (a) to cause the latter to inflate, and

(c) a rigid reinforcing member substantially filling the internal chamber of (a) when the latter is in the deflated condition.

The internal chamber and hence the reinforcing member, are preferably circular in cross-section.

The presence of the reinforcing member ensures more accurate positioning of the internal chamber and greater uniformity of expansion of the body.

Furthermore the reinforcing member renders the sealing element more robust and, in the case of high external pressure, prevents damage to the seal by inward collapse.

Since the reinforcing member substantially fills the internal chamber in its deflated condition, the amount of fluid required to inflate the chamber is considerably reduced.

The fluid may be pneumatic but is preferably hydraulic.

Preferably the fluid is fed through the reinforcing member to the front face of the internal chamber, i.e. the face nearest to the surface. With the alternative arrangement, there is sometimes a tendency for the reinforcing member to block the fluid line when the seal is depressurising.

Preferably the sealing element comprises a surface layer comprising at least a section of a relatively hard elastomer.

The soft elastomer surrounding the chamber provides the flexibility for expansion and the hard elastomer at the surface reduces the tendency of the seal to extrude at the surface when pressure is applied and the sealing element is in contact with the non-compressible surface.

Preferably, the softer elastomer has a Shore hardness in the range 35 to 55 and the harder in the range 60 to 80.

The tendency to extrude can be reduced still further by fitting a hard, non-elastomeric sleeve around the surface layer. This preferably extends into and surrounds at least a section of the softer material. The sleeve is preferably metallic in composition.

The sealing element is suitable for use with flat surfaces such as those encountered in gate valves, or curved surfaces. It is particularly effective in ball valves of the type described in European Patent Application No 0 063 959 in which the seal is withdrawn into a recess in the valve housing when depressurised in order to facilitate movement of the ball.

In the latter case, of course, the seal body will be in the form of a hollow annulus and the reinforcing member in the form of an annulus, preferably a solid one.

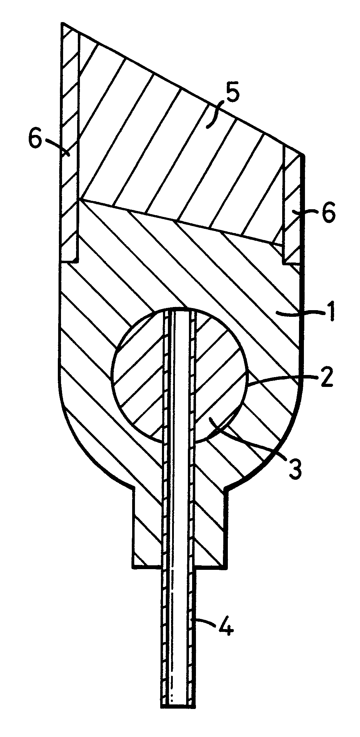

The invention is illustrated with reference to the accompanying drawing which is a cross-section of a sealing element for a ball valve.

The element comprises an annular main body 1 fabricated from a fluorosilicone elastomer of Shore hardness 46. This contains a hollow chamber 2 within which is located a solid steel reinforcing ring 3.

A spigot 4, which penetrates the ring 3 delivers hydraulic fluid to the front surface of the chamber 2.

A surface layer 5 of fluorosilicone elastomer of Shore hardness 70 is bonded to the main body 1 and surrounded by a stainless steel antiextrusion ring 6 which extend downwards into the main body 1 of the seal.

The seal will normally be positioned within a recess in a ball valve housing with its surface not projecting above the surface of the housing in the deflated position of the seal.

When hydraulic fluid is supplied under pressure through the spigot 4 the chamber 2 inflates. The soft rubber of the main body 1 expands but because sidewards and rearwards expansion are constrained by the wall of the recess, the expansion is directed to forward movement. The surface layer 5 emerges from the recess and bears hard against the ball to provide a very efficient seal which is not affected by minor defects such as scratches which may be present on the ball or the surface layer of the seal.

When the seal is depressurised, the chamber 2 is deflated and the seal retracts so that again it lies wholly within the recess in the housing.

Claims:

1 An inflatable sealing element comprising:

(a) a body of elastomeric material having an internal chamber and being adapted when inflated to bear against a non-compressible surface to effect a seal,

(b) a feed spigot for supplying fluid to the internal chamber of (a) to cause the latter to inflate, and

(c) a rigid reinforcing member substantially filling the internal chamber of (a) when the latter is in the deflated condition.

2 An inflatable sealing element according to claim 1 wherein the fluid is supplied through the reinforcing member to the front face of the internal chamber.

3 An inflatable sealing element according to claim 1 wherein the sealing element comprises a surface layer comprising at least a section of a relatively hard elastomer.

4 An inflatable sealing element according to claim 1 wherein a hard, non-elastomeric sleeve is fitted around the surface layer.

5 A ball valve comprising a sealing element according to claim 1.